# EUROPEAN PATENT SPECIFICATION

(11) **EP 2 552 233 B1**
(45) Date of publication and mention of the grant of the patent: **14.05.2014**
(21) Application number: 11716040.8
(22) Date of filing: 09.03.2011
(51) Int. Cl.: A23L 1/00, A23L 1/035, A23L 1/09, A23L 1/22, A23P 1/04, B01J 13/02, B01J 13/04

(54) **PREPARATION OF SOLID CAPSULES COMPRISING FLAVOURS**
HERSTELLUNG SOLIDER KAPSELN MIT AROMEN
PREPARATION DE CAPSULES SOLIDES COMPORTANT DES SAVEURS

(30) Priority: 31.03.2010 EP 10158818
(43) Date of publication of application: 06.02.2013
(73) Proprietor: Firmenich SA, 1211 Genève 8 (CH)
(72) Inventor: BOUQUERAND, Pierre-Etienne, CH-1211 Geneva 8 (CH); HAFNER, Valeria, CH-1211 Geneva 8 (CH); MEYER, François, CH-1211 Geneva 8 (CH); PARKER, Alan, CH-1211 Geneva 8 (CH)
(74) Representative: Carina, Riccardo Filippo
(86) International application number: PCT/IB2011/050975
(87) International publication number: WO 2011/121468

(56) References cited:
- EP-A2- 1 252 828
- US-A1- 2006 222 766
- US-B1- 6 482 433
- US-B1- 6 576 247

## Description

### Technical Field

The present invention relates to a process for the preparation of solid capsules comprising flavours, in which an emulsion comprising flavour or fragrance, a natural extract comprising saponins, water and a water-soluble biopolymer having a molecular weight below 100 KDa is spray-dried. The invention further relates to the solid capsules as such and to products containing them.

### Prior art

Spray-drying is a well known technique for the encapsulation of flavours. Spray-dried products are commonly prepared from an emulsion that is sprayed into a drying chamber. The emulsion typically comprises flavours, a carrier and an emulsifier.

A number of emulsion parameters influence the quality of the spray-dried solid capsules. In particular, it is well-known to the person skilled in the art of spray-drying that it is desirable to spray-dry a good emulsion, as defined by relatively small droplet size of the discontinuous phase, said emulsion also preferably remaining stable during the whole duration of the spray-drying process, taking into account that, depending on the manufacturing set up, the time-delay between emulsion preparation and actual spray-drying can vary from a few minutes to several hours. The stability of the droplet size in the emulsion is even more important and difficult to achieve when high amounts of flavours are intended to be encapsulated.

It is therefore desirable to provide solid capsules obtained from emulsions having an enhanced stability and in particular having a droplet size which remains stable during a prolonged period of time.

The nature of the spray-drying process also requires the emulsions to be sprayable. The emulsion therefore cannot exceed a certain viscosity limit, which depends on the apparatus used. In order to decrease the viscosity, it is known to add water to the emulsion. However, the additional water will have to be evaporated during the drying step. Such evaporation has a high energy cost. It would therefore be desirable to provide means to further reduce the viscosity of the sprayed emulsion without further increasing the proportion of water.

Most of the time, biopolymers with surface active properties, such as for example gum arabic, modified starches, modified cellulose, gelatine, alginates or even proteins such as albumin or beta-globulin, are used as emulsifiers.

For example, US 2009/0253612 describes a spray-dry encapsulation process for flavour or fragrance comprising drying an aqueous emulsion containing the oil to be encapsulated, modified starch and phosphate salts.

Hidefumi et al., Innovative Food Science & Emerging Technologies, 2 (2001), pp. 55-61, discloses a process for the microencapsulation of emulsified ethyl butyrate by spray-drying using maltodextrin as carrier and gum arabic as emulsifier.

However, modified starch, modified cellulose, gelatine, alginates, proteins and especially gum arabic have undesired viscosifying properties. It would therefore be desirable to reduce the viscosity of such emulsions.

To solve this problem, it is already known to replace part of the gum arabic by low molecular weight emulsifiers such as fatty acids or glycerol esters. For example, WO 2006/082536 describes a method for the preparation of a spray-dried powder, which comprises the steps of emulsifying the active ingredient in a gum arabic and non-ionic emulsifier mixture, homogenizing the emulsion and spray-drying the latter to form a particulate product. The non-ionic emulsifiers may be a low molecular weight emulsifier such as di-acetyl tartaric acid esters of mono and diglycerides, such as DATEM or CITREM).

US 6 482 433 B1 discloses a standard process for preparing flavour capsules. EP 1 252 828 A2 teaches a process for obtaining powder flavours using an emulsifier selected from: sucrose fatty acid ester, lecithin, polyglycerol fatty acid ester, processed starch, Quillaja saponin.

With the same concentrations of emulsifier, water and flavour, the viscosity of the emulsion is reduced when part of the biopolymer is replaced by such low molecular weight emulsifiers. However the major drawback of these low molecular weight emulsifiers is their tendency to stick to spray-drier chamber walls and to the surface of other particles in the spray-drier when they are used in sufficient amounts to reduce the viscosity of the emulsion.

It would therefore be desirable to provide a new encapsulation process, in which the viscosity of the sprayable emulsion is reduced compared to known sprayable emulsions having the same amount of solid, water and flavour, and in which the components of the sprayable emulsion have reduced tendency to stick to the drying chamber's walls.

In addition, due to the constantly growing consumers' request for natural products, it would be especially advantageous to provide a spray-dried product in which every component can be obtained from a natural source.

To the best of our knowledge none of the processes described in the prior art solves these problems.

### Summary of the Invention

Accordingly, the invention relates to a process for preparing solid capsules, the process comprising the steps of :
a) preparing an emulsion comprising
   i. from 0.1 to 10% of a natural extract comprising saponins;
   ii. from 5 to 55% of a water soluble biopolymer having a molecular weight below 100 KDa;
   iii. from 5 to 60% of flavour or fragrance; and
   iv. from 15 to 80% of water;
   the percentages being defined by weight, relative to the total weight of the emulsion;
b) spray-drying the emulsion obtained in step a) so as to obtain solid capsules.

In another aspect, the invention relates to solid capsules obtainable by the process of the invention.

In a further aspect the invention relates to a food product comprising the solid capsules of the invention.

### Detailed description of the invention

The process of the present invention comprises the step of preparing an emulsion comprising
i. from 0.1 to 10% of a natural extract comprising saponins;
ii. from 5 to 55% of a water soluble biopolymer having a molecular weight below 100 KDa;
iii. from 5 to 60% of flavour or fragrance; and
iv. from 15 to 80% of water;
the percentages being defined by weight, relative to the total weight of the emulsion.

Saponins are amphiphilic glycosides composed of one or more hydrophilic glucoside moiety combined with a lipophilic triteipene derivative. Saponins are present in diverse plant extracts. As "natural extract comprising saponins" it is meant here any saponin or mixture of substances comprising saponins obtained by applying a physical separation process to a raw material that is available in nature. Preferred natural extracts are those comprising at least 10% by weight, more preferably at least 20% by weight, even more preferably at least 50% by weight, most preferably at least 80% by weight, relative to the total weight of the extract, of saponins,

As preferred examples of natural extracts that can be used in the present invention, one can cite plant extracts, such as quillaja extract, camellia seeds extract, achyranthe extract, glycyrrhizine and stevia. Quillaja extract, which is obtained from the bark of *Quillaja saponaria* is particularly appreciated for the purpose of the present invention. Such plant extracts are commercially available from diverse suppliers. For example, quillaja extract can be purchased in a dilute form from National Starch under the trade name Q-Naturale™ (Quillaja extract in water).

In a preferred aspect of the invention, the extract is used in an amount of from 0.2 to 5% by weight, more preferably from 0.3 to 1% by weight, relative to the total weight of the emulsion.

Any water soluble biopolymer with a molecular weight below 100 KDa can be used for the purpose of the invention. By "water soluble biopolymer" is intended for the purpose of the present invention as any biopolymer which forms a clear solution in water, i.e. which forms a one-phase solution in water. Preferably, it forms a one phase solution when dissolved at 10%, more preferably even at 20% in water.

Preferred water soluble biopolymers are starch hydrolysates with a dextrose equivalent above 2. Examples of such biopolymers are di-saccharides, oligosaccharides, polysaccharides. Mostly preferred polysaccharides are selected from dextrins, maltodextrins and corn-syrup.

It is also particularly advantageous to use water soluble biopolymers which do not comprise any chemical substitution, meaning that the water soluble biopolymer has not been chemically (i.e. artificially) modified. Preferably, the water soluble biopolymer is available as such in nature and more preferably it is isolated from a natural source.

The water soluble biopolymer is preferably used in an amount of from 10 to 50% by weight, more preferably from 35 to 45% by weight, relative to the total weight of the emulsion.

For the purpose of the present invention, flavouring and/or perfuming ingredients encompass flavour and fragrance ingredients or compositions of current use in the flavour and/or fragrance industry, of both natural and synthetic origin. It includes single compounds and mixtures. Specific examples of such flavour and/or fragrance ingredients may be found in the current literature, e.g. in Fenaroli's Handbook of flavour ingredients, 1975, CRC Press; Synthetic Food adjuncts, 1947 by M.B. Jacobs, edited by Van Nostrand; or Perfume and Flavor Chemicals by S. Arctander, 1969, Montclair, New Jersey (USA). Many other examples of current flavouring and/or perfuming ingredients may be found in the patent and general literature available. The flavouring and/or perfuming ingredients may be present in the form of a mixture with solvents, adjuvants, additives and/or other components, generally those of current use in the flavour and fragrance industry.

"Flavouring ingredients" are well known to a person skilled in the art of aromatising as being capable of imparting a flavour or taste to a consumer product, or of modifying the taste and/or flavour of said consumer product, or yet its texture or mouthfeel.

By "perfuming ingredients" it is understood here compounds which are used as active ingredients in perfuming preparations or compositions in order to impart a hedonic effect when applied on a surface. In other words, such compounds, to be considered as being perfuming ones, must be recognized by a person skilled in the art of perfumery as being able to impart or modify in a positive or pleasant way the odor of a composition or of an article or surface, and not just as having an odor. Moreover, this definition is also meant to include compounds that do not necessarily have an odor but are capable of modulating the odor of a perfuming composition, perfumed article or surface and, as a result, of modifying the perception by a user of the odor of such a composition, article or surface. It also contains malodor counteracting ingredients and compositions. By the term "malodor counteracting ingredient" we mean here compounds which are capable of reducing the perception of malodor, i.e. of an odor that is unpleasant or offensive to the human nose by counteracting and/or masking malodors. In a particular embodiment, these compounds have the ability to react with key compounds causing known malodors. The reactions result in reduction of the malodor materials' airborne levels and consequent reduction in the perception of the malodor.

There is no particular limitation as to the nature of the flavour and/or fragrance that can be encapsulated by the process of the present invention. However, flavours and/or fragrance characterized by a logP value of 2 or more are particularly preferred for the purpose of the present invention.

The flavour and/or fragrance is preferably used in an amount of from 7 to 30% by weight, more preferably from 10 to 15% by weight, relative to the total weight of the emulsion.

The emulsion may also contain optional ingredients. It may in particular further contain an effective amount of a fireproofing or explosion suppression agents. The type and concentration of such agents in spray-drying emulsions is known to the person skilled in the art. One can cite as non-limiting examples of such fireproofing or explosion suppression agents inorganic salts, C₁-C₁₂ carboxylic acids, salts of C₁-C₁₂ carboxylic acids and mixtures thereof. Preferred explosion suppression agents are, salicylic acid, acetic acid, propionic acid, butyric acid, isobutyric acid, valeric acid, caproic acid, citric acid, succinic acid, hydroxysuccinic acid, maleic acid, fumaric acid, oxylic acid, glyoxylic acid, adipic acid, lactic acid, tartaric acid, ascorbic acid, the potassium, calcium and/or sodium slats of any of the afore-mentioned acids, and mixtures of any of these. Other optional ingredients include antioxidants, colorants and dyes.

The emulsion can be formed using any known emulsifying method, such as high shear mixing, sonication or homogenization. Such emulsifying methods are well known to the person skilled in the art.

The droplet size d(v,0.9) of the emulsion is preferably comprised between 1 and 15 µm, more preferably between 1 and 10 µm and even more preferably between 1 and 6 µm. More preferably, the droplet size remains within such range for at least one day storage at ambient temperature (25°C).

The viscosity of the emulsion is preferably comprised between 20 and 300 mPas, more preferably between 70 and 200 mPas and even more preferably between 100 and 150 mPas at the temperature at which the atomization step, as defined below, is carried out.

In step b), the emulsion is spray-dried so as to obtain solid capsules. The spray-drying process comprises two steps, the first one being dispersion and the second one being drying.

The emulsion is first subjected to an atomization step, during which the emulsion is dispersed in the form of drops into a spraying tower. Any device capable of dispersing the emulsion in the form of drops can be used to carry out such dispersion. For instance, the emulsion can be guided through a spraying nozzle or through a centrifugal wheel disk into the spraying tower. Vibrated orifices may also be used.

The size of the capsules is determined by the size of the drops that are dispersed into the tower. If a spraying nozzle is used for dispersing the drops the size may be controlled by the flow rate of an atomising gas through the nozzle, for example. In the case where a centrifugal wheel disk is used for dispersal, the main factor for adjusting droplet size is the centrifugal force with which the drops are dispersed from the disk into the tower. The centrifugal force, in turn, depends on the speed of rotation and the diameter of the disk. The feed flow rate of the emulsion, its surface tension and its viscosity are also parameters controlling the final drop size and size distribution. By adjusting these parameters, the skilled person can control the size of the drops of the emulsion to be dispersed in the tower.

Once sprayed in the chamber, the droplets are dried using any technique known in the art. These methods are perfectly documented in the patent and non-patent literature in the art of spray-drying. For example, Spray-Drying Handbook, 3rd ed., K. Masters; John Wiley (1979), describes a wide variety of spray-drying methods.

The process of the present invention may be performed in any conventional spraying tower. A conventional multi-stage drying apparatus is for example appropriate for conducting the steps of this process. It may comprise a spraying tower, and, at the bottom of the tower, a fluidised bed intercepting partially dried particles after falling through the tower.

The solid capsules obtainable and/or obtained by the process described above are also an object of the present invention.

The obtained solid capsules typically comprise
- from 0.5 to 30% of a natural extract comprising saponins
- from 15 to 94% of a water soluble biopolymer having a molecular weight below 100 KDa,
- from 5 to 75% of flavour or fragrance; and
- from 0.5 to 10% of water;
the percentage being defined by weight, relative to the total weight of the capsules.

All components of the capsules are as defined above.

Preferably the solid capsules comprise between 0.5 and 5% by weight, preferably between 0.5 and 3% by weight of water, relative to the total weight of the solid capsules.

In a preferred aspect of the invention the size of the particles is typically comprised between 20 and 200 µm, more preferably between 50 and 100 µm, even more preferably from 75 to 85 µm.

The capsules of the invention have satisfying storage stability, even at 60% relative humidity.

In another aspect, the invention relates to a food product comprising the solid capsules of the invention. The food product of the invention preferably is a particulate or powdery food. In such a case, the capsules of the invention may easily be added thereto by dry-mixing.

In a preferred aspect of the invention, the food product is selected from the group consisting of an instant soup or sauce, a breakfast cereal, a powdered milk, a baby food, a powdered drink, a powdered chocolate drink, a spread, a powdered cereal drink, a chewing gum, an effervescent tablet, a cereal bar, and a chocolate bar. The powdered foods or drinks may be intended to be consumed after reconstitution of the product with water, milk and/or a juice, or another aqueous liquid.

### Examples

The invention will now be described in further detail by way of the following examples.

### Example 1

### Preparation of solid capsules according to the invention

Emulsion A was prepared by homogenizing the following ingredients:

**Table 1 : Composition of Emulsion A**

| Ingredient | Parts [%] |
|---|---|
| Natural extract comprising saponins¹⁾ | 5 |
| Polysaccharide²⁾ | 38.6 |
| Flavour³⁾ | 14.3 |
| Water | 42.1 |

| | |
|---|---|
| 1) Q-Naturale™ (Solution of quillaja extract in water, origin: National Starch) 2) Glucidex^{®} 18 DE (Maltodextrin, origin: Roquette Frères) 3) Limonene | |

The emulsion had a viscosity of 113 mPas at 25°C and the droplet size d(v,0.9) was of 1.8 µm.

Capsules A were prepared by spray-drying Emulsion A using a Buchi Mini Spray-Dryer B-290, supplied by Büchi, Flawil, Switzerland, with an air inlet temperature set to 180°C. The air outlet temperature was of 100°C. The emulsion before atomization was at ambient temperature.

The obtained capsules had the following composition:

**Table 2 : Composition of Capsules A**

| Ingredient | Parts [%] |
|---|---|
| Natural extract comprising saponins¹⁾ | 1.6 |
| Polysaccharide²⁾ | 79.4 |
| Flavour ³⁾ | 16.4 |
| Water | 2.6 |

| | |
|---|---|
| 1) Dry quillaja extract 2) Glucidex^{®} 18 DE (Maltodextrin, origin: Roquette Frères) 3) Limonene | |

The obtained capsules were characterized by a glass transition temperature of 85°C and the particle size d(v,0.9) was 78 µm.

### Example 2

### Preparation of solid capsules according to the invention

Emulsion B was prepared by homogenizing the following ingredients:

**Table 3 : Composition of Emulsion B**

| Ingredient | Parts [%] |
|---|---|
| Natural extract comprising saponins¹⁾ | 2 |
| Polysaccharide²⁾ | 41.2 |
| Flavour³⁾ | 14.3 |
| Water | 42.5 |

| | |
|---|---|
| 1) Q-Naturale™ (Solution of quillaja extract in water, origin: National Starch) 2) Glucidex^{®} 18 DE (Maltodextrin, origin: Roquette Frères) 3) Limonene | |

The emulsion had a viscosity of 130 mPas at 25°C and the droplet size d(v.0.9) was of 5.4 µm.

Capsules B were prepared by spray-drying Emulsion B using a Buchi Mini Spray-Dryer B-290, supplied by Büchi, Flawil, Switzerland, with an air inlet temperature set to 180°C. The air outlet temperature was of 100°C. The emulsion before atomization was at ambient temperature.

The obtained capsules had the following composition:

**Table 4 : Composition of Capsules B**

| Ingredient | Parts [%] |
|---|---|
| Natural extract comprising saponins¹⁾ | 0.6 |
| Polysaccharide²⁾ | 80.8 |
| Flavour³⁾ | 16.6 |
| Water | 2.0 |

| | |
|---|---|
| 1) Dry quillaja extract 2) Glucidex^{®} 18 DE (Maltodextrin, origin: Roquette Frères) 3) Limonene | |

The obtained capsules were characterized by a glass transition temperature of 90°C and the particle size d(v,0.9) was 80 µm.

## Claims

1. A process for preparing solid capsules, the process comprising the steps of:
a) preparing an emulsion comprising
- from 0.1 to 10% of a natural extract comprising saponins;
- from 5 to 55% of a water soluble biopolymer having a molecular weight below 100 KDa;
- from 5 to 60% of flavour or fragrance; and
- from 15 to 80 % of water;
the percentages being defined by weight, relative to the total weigh of the emulsion;
b) spray-drying the emulsion obtained in step a) so as to obtain solid capsules.

2. A process according to claim 1, wherein the natural extract comprises at least 10% by weight of saponins, relative to the total weight of the extract.

3. A process according to claim 1 or 2, wherein the natural extract is a plant extract.

4. A process according to claim 3, wherein the natural extract is a quillaja extract.

5. A process according to any one of claims 1 to 4, wherein the water soluble biopolymer is a starch hydrolysate with a dextrose equivalent above 2.

6. A process according to any one of claims 1 to 4, wherein the water soluble biopolymer is a selected from dextrins, maltodextrins and corn syrup.

7. A process according to any one of claims 1 to 6, wherein the flavour or fragrance has a logP value of 2 or more.

8. A process according to any one of claims 1 to 7, wherein the natural extract is used in an amount comprised between 0.2 and 5% by weight, relative to the total weight of the emulsion.

9. A process according to any one of claims 1 to 8, wherein the water soluble polymer is used in an amount comprised between 10 and 50% by weight, relative to the total weight of the emulsion.

10. A process according to any one of claims 1 to 9, wherein the flavour or fragrance is used in an amount comprised between 7 and 30% by weight, relative to the total weight of the emulsion.

11. Solid capsules obtainable by the process of any one of claims 1 to 10.

12. Solid capsules according to claim 11, comprising:
- from 0.7 to 30% of a natural extract comprising saponins
- from 15 to 95% of a a water soluble biopolymer having a molecular weight below 100 KDa,
- from 5 to 75% of flavour; and
- from 0.5 to 10% of water;
the percentages being defined by weight, relative to the total weight of the capsules.

13. A food product comprising the solid capsules according to claim 11 or 12.

14. A food product according to claim 13, in the form of a particulate or powdery food.

15. A food product according to claim 13 or 14, in the form of an instant soup or sauce, a breakfast cereal, a powdered milk, a baby food, a powdered drink, a powdered chocolate drink, a spread, a powdered cereal drink, a chewing gum, an effervescent tablet, a cereal bar, and a chocolate bar.

## Patentansprüche

1. Verfahren zum Herstellen fester Kapseln, wobei das Verfahren die Schritte umfasst:
a) Herstellen einer Emulsion, umfassend
- von 0,1 bis 10% eines natürlichen Extrakts, umfassend Saponine;
- von 5 bis 55% eines wasserlöslichen Biopolymers mit einem Molekulargewicht unter 100 KDa;
- von 5 bis 60% Aromastoff oder Duftstoff; und
- von 15 bis 80% Wasser;
wobei die Prozentgehalte durch das Gewicht, relativ zu dem Gesamtgewicht der Emulsion, definiert sind;
b) Sprühtrocknen der Emulsion, erhalten in Schritt a), um feste Kapseln zu erhalten.

2. Verfahren gemäß Anspruch 1, wobei der natürliche Extrakt mindestens 10 Gew.-% Saponine, relativ zu dem Gesamtgewicht des Extrakts, umfasst.

3. Verfahren gemäß Anspruch 1 oder 2, wobei der natürliche Extrakt ein Pflanzenextrakt ist.

4. Verfahren gemäß Anspruch 3, wobei der natürliche Extrakt ein Quillajaextrakt ist.

5. Verfahren gemäß einem der Ansprüche 1 bis 4, wobei das wasserlösliche Biopolymer ein Stärkehydrolysat mit einem Dextrose-Äquivalent über 2 ist.

6. Verfahren gemäß einem der Ansprüche 1 bis 4, wobei das wasserlösliche Biopolymer aus Dextrinen, Maltodextrinen und Maissirup ausgewählt ist.

7. Verfahren gemäß einem der Ansprüche 1 bis 6, wobei der Aromastoff oder Duftstoff einen logP-Wert von 2 oder mehr hat.

8. Verfahren gemäß einem der Ansprüche 1 bis 7, wobei der natürliche Extrakt in einem Anteil zwischen 0,2 und 5 Gew.-%, relativ zu dem Gesamtgewicht der Emulsion, verwendet wird.

9. Verfahren gemäß einem der Ansprüche 1 bis 8, wobei das wasserlösliche Polymer in einem Anteil zwischen 10 und 50 Gew.-%, relativ zu dem Gesamtgewicht der Emulsion, verwendet wird.

10. Verfahren gemäß einem der Ansprüche 1 bis 9, wobei der Aromastoff oder Duftstoff in einem Anteil zwischen 7 und 30 Gew.-%, relativ zu dem Gesamtgewicht der Emulsion, verwendet wird.

11. Feste Kapseln, erhältlich durch das Verfahren nach einem der Ansprüche 1 bis 10.

12. Feste Kapseln gemäß Anspruch 11, umfassend
- von 0,7 bis 30% eines natürlichen Extrakts, umfassend Saponine;
- von 15 bis 95% eines wasserlöslichen Biopolymers mit einem Molekulargewicht unter 100 KDa;
- von 5 bis 75% Aromastoff; und
- von 0,5 bis 10% Wasser;
wobei die Prozentgehalte durch das Gewicht, relativ zu dem Gesamtgewicht der Kapseln, definiert sind.

13. Nahrungsmittelprodukt, umfassend die festen Kapseln gemäß Anspruch 11 oder 12.

14. Nahrungsmittelprodukt gemäß Anspruch 13 in der Form eines teilchenförmigen oder pulverförmigen Nahrungsmittels.

15. Nahrungsmittelprodukt gemäß Anspruch 13 oder 14 in der Form einer Instantsuppe oder -sauce, einer Frühstückscerealie, eines Milchpulvers, einer Babynahrung, eines Getränkepulvers, eines Schokoladen-Getränkepulvers, eines Aufstrichs, eines Getreide-Getränkepulvers, eines Kaugummis, einer Brausetablette, eines Cerealienriegels und eines Schokoladenriegels.

## Revendications

1. Procédé de préparation de capsules solides, le procédé comprenant les étapes consistant à:
a) préparer une émulsion comprenant:
- de 0,1 à 10 % d'un extrait naturel comprenant des saponines;
- de 5 à 55 % d'un biopolymère soluble dans l'eau ayant une masse moléculaire inférieure à 100 KDa;
- de 5 à 60 % d'arôme ou de parfum; et
- de 15 à 80 % d'eau;
le pourcentage étant défini en poids par rapport au poids total de l'émulsion;
b) sécher par atomisation l'émulsion obtenue à l'étape a) pour obtenir des capsules solides.

2. Procédé selon la revendication 1, dans lequel l'extrait naturel comprend au moins 10 % en poids de saponines par rapport au poids total de l'extrait.

3. Procédé selon la revendication 1 ou 2, dans lequel l'extrait naturel est un extrait végétal.

4. Procédé selon la revendication 3, dans lequel l'extrait naturel est un extrait de quillaja.

5. Procédé selon l'une quelconque des revendications 1 à 4, dans lequel le biopolymère soluble dans l'eau est un hydrolysat d'amidon ayant un dextrose équivalent supérieur à 2.

6. Procédé selon l'une quelconque des revendications 1 à 4, dans lequel le biopolymère soluble dans l'eau est sélectionné parmi des dextrines, maltodextrines et sirop de maïs.

7. Procédé selon l'une quelconque des revendications 1 à 6, dans lequel l'arôme ou le parfum a une valeur logP de 2 ou plus.

8. Procédé selon l'une quelconque des revendications 1 à 7, dans lequel l'extrait naturel est utilisé en une quantité comprise entre 0,2 et 5 % en poids par rapport au poids total de l'émulsion.

9. Procédé selon l'une quelconque des revendications 1 à 8, dans lequel le polymère soluble dans l'eau est utilisé en une quantité comprise entre 10 et 50 % en poids par rapport au poids total de l'émulsion.

10. Procédé selon l'une quelconque des revendications 1 à 9, dans lequel l'arôme ou le parfum est utilisé en une quantité comprise entre 7 et 30 % en poids par rapport au poids total de l'émulsion.

11. Capsules solides pouvant être obtenues par le procédé selon l'une quelconque des revendications 1 à 10.

12. Capsules solides selon la revendication 11, comprenant:
- de 0,7 à 30 % d'un extrait naturel comprenant des saponines,
- de 15 à 95 % d'un biopolymère soluble dans l'eau ayant une masse moléculaire inférieure à 100 KDa,
- de 5 à 75 % d'arôme; et
- de 0,5 à 10 % d'eau;
le pourcentage étant défini en poids par rapport au poids total des capsules.

13. Produit alimentaire comprenant les capsules solides selon la revendication 11 ou 12.

14. Produit alimentaire selon la revendication 13, sous forme d'un aliment particulaire ou en poudre.

15. Produit alimentaire selon la revendication 13 ou 14, sous forme d'une soupe ou d'une sauce instantanée, de céréales pour le petit déjeuner, d'un lait en poudre, d'un aliment pour bébés, d'une boisson en poudre, d'un chocolat à boire en poudre, d'un produit à tartiner, d'une boisson en poudre à base de céréales, d'un chewing-gum, d'un comprimé effervescent, d'une barre de céréales et d'une barre de chocolat.
